(19) Europäisches Patentamt
European Patent Office
Office européen des brevets

(11)     EP 2 419 310 B1

(12)     EUROPÄISCHE PATENTSCHRIFT

(45) Veröffentlichungstag und Bekanntmachung des Hinweises auf die Patenterteilung:
**26.12.2012 Patentblatt 2012/52**

(51) Int Cl.:
*B60T 13/66* (2006.01)        *B60T 13/74* (2006.01)
*B60T 8/44* (2006.01)

(21) Anmeldenummer: **10705843.0**

(22) Anmeldetag: **15.02.2010**

(86) Internationale Anmeldenummer:
**PCT/EP2010/051827**

(87) Internationale Veröffentlichungsnummer:
**WO 2010/118901 (21.10.2010 Gazette 2010/42)**

(54) **VERFAHREN ZUM BETREIBEN EINES BREMSKRAFTVERSTÄRKTEN BREMSSYSTEMS EINES FAHRZEUGS UND STEUERVORRICHTUNG FÜR EIN BREMSKRAFTVERSTÄRKTES BREMSSYSTEM EINES FAHRZEUGS**

METHOD AND CONTROL DEVICE FOR OPERATING AVEHICLE BRAKE SYSTEM HAVING A BRAKE BOOSTER

MÉTHODE ET DISPOSITIF D'OPERATION POUR UN SYSTÈME DE FREINAGE D'UN VÉHICULE AVEC SERVOFREIN

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **14.04.2009 DE 102009002359**

(43) Veröffentlichungstag der Anmeldung:
**22.02.2012 Patentblatt 2012/08**

(73) Patentinhaber: **Robert Bosch GmbH**
**70442 Stuttgart (DE)**

(72) Erfinder:
• **VOLLERT, Herbert**
**71665 Vaihingen/Enz (DE)**
• **KNEIP, Frank**
**74360 Ilsfeld (DE)**
• **MAHNKOPF, Dirk**
**71634 Eglosheim (DE)**

(56) Entgegenhaltungen:
EP-A1- 1 953 053        DE-A1- 10 055 715
DE-A1- 10 057 557      DE-A1- 10 327 553
DE-A1-102005 024 577

**Beschreibung**

Die Erfindung betrifft ein Verfahren eines bremskraftverstärkten Bremssystems eines Fahrzeugs. Des Weiteren betrifft die Erfindung eine Steuervorrichtung für ein bremskraftverstärktes Bremssystem eines Fahrzeugs.

Stand der Technik

Um einem Fahrer eines Fahrzeugs ein komfortables Betätigen eines Betätigungselements eines Bremssystems, wie beispielsweise eines Bremspedals, zu ermöglichen, weist ein Bremssystem in der Regel einen Bremskraftverstärker auf. Das Bremssystem mit einem Bremskraftverstärker wird oft als bremskraftverstärktes Bremssystem bezeichnet.

Ein Bremskraftverstärker ist dazu ausgelegt, eine Unterstützungskraft bereitzustellen, welche zusätzlich zu einer von dem Fahrer auf das Betätigungselement ausgeübten Fahrerbremskraft das Abbremsen mindestens eines Rads bewirkt. Geeignete Bremskraftverstärker sind beispielsweise in der DE 10 2005 024 577 A1, der DE 10057 557 A1 und in der DE 103 27 553 A1 beschrieben.

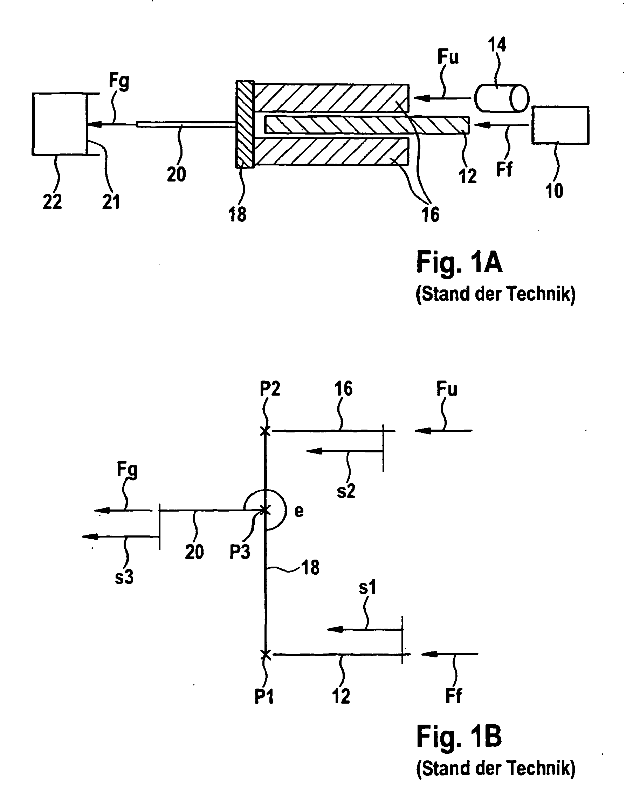

Fig. 1A und B zeigen schematische Darstellungen zum Erläutern einer Funktionsweise eines herkömmlichen Bremskraftverstärkers.

Das in Fig. 1A teilweise schematisch wiedergegebene Bremssystem weist ein Betätigungselement 10 auf, welches beispielsweise als Bremspedal ausgebildet ist. Über ein Betätigen des Betätigungselements 10 kann der Fahrer eine Fahrerbremskraft Ff und einen ersten Verstellweg s1 auf eine weiterleitende Komponente des Bremssystems, beispielsweise auf einen Eingangskolben 12, ausüben (siehe Ersatzschaltbild der Fig. 1 B). Zusätzlich ist die Fahrerbremskraft Ff über eine (nicht skizzierte) Betätigungselement-Sensorik erfassbar. Die Betätigungselement-Sensorik umfasst beispielsweise einen Kraftsensor zum Messen der Fahrerbremskraft Ff und/oder einen Wegsensor zum Ermitteln des ersten Verstellwegs s1 einer verstellbaren Komponente des Betätigungselements 10.

Das Bremssystem weist zusätzlich einen Bremskraftverstärker 14 auf. Der Bremskraftverstärker 14 ist dazu ausgelegt, eine Unterstützungskraft Fu bereitzustellen, damit der Fahrer die zum Abbremsen seines Fahrzeugs benötigte Kraft nicht vollständig als Fahrerbremskraft Ff aufbringen muss. Die von dem Bremskraftverstärker 14 bereitgestellte Unterstützungskraft Fu kann beispielsweise eine Funktion der Fahrerbremskraft Ff sein.

Das Betätigungselement 10 und der Bremskraftverstärker 14 sind so in dem Bremssystem angeordnet, dass zumindest die Fahrerbremskraft Ff und die Unterstützungskraft Fu eine Gesamtbremskraft Fg bewirken. Die Gesamtbremskraft Fg kann jedoch noch mindestens eine weitere Kraft umfassen. Beispielsweise überträgt der Bremskraftverstärker 14 die Unterstützungskraft Fu und einen zweiten Verstellweg s2 auf einen Unterstützungskolben 16, welcher zusammen mit dem Eingangskolben 12 an ein Koppelelement, wie die gezeigte Reaktionsscheibe 18, gekoppelt ist. In dem Ersatzschaltbild der Fig. 1 B wirken der Eingangskolben 12 auf einen ersten Punkt P1 und der Unterstützungskolben 16 auf einen zweiten Punkt P2 der Reaktionsscheibe 18. Wie der Fachmann erkennt, können die Punkte P1 und P2 Flächen entsprechen. Beispielsweise entspricht der Punkt P2 bei einem rohrförmigen Unterstützungskolben 16 einer Ringfläche.

Auf diese Weise sind die Gesamtbremskraft Fg und ein dritter Verstellweg s3 auf eine ausgangsseitig von dem Koppelelement angeordnete Komponente, wie beispielsweise dem Ausgangskolben 20, übertragbar. Dabei berührt der Ausgangskolben 20 die Reaktionsscheibe 18 an einem dritten Punkt P3, bzw. an einer entsprechenden.

Ein Quotient x gibt das Verhältnis eines ersten Abstands zwischen den Punkten P2 und P3 und eines zweiten Abstands zwischen den Punkten P3 und P1 an. Im Falle einer elastischen Reaktionsscheibe 18 wird diese bei einer Fahrerbremskraft Ff ≠ 0 und/oder einer Unterstützungskraft Fu ≠ 0 deformiert (in Fig. 1 B nicht dargestellt). Die Verbiegbarkeit der Reaktionsscheibe 18 kann als Elastizität e angegeben werden. Der Ausgangskolben 20 ist an eine verstellbare Komponente 21 eines Kraft-Druck-Umwandlungselements, beispielsweise eines Hauptbremszylinders 22, gekoppelt. An das Kraft-Druck-Umwandlungselement ist ein mit einem Bremsmedium gefüllter (nicht skizzierter) Bremskreis mit mindestens einem Radbremszylinder angeschlossen. Durch eine Veränderung eines Bremsdrucks in dem mindestens einen Radbremszylinder kann das mindestens eine zugeordnete Rad abgebremst werden.

Das Betreiben eines herkömmlichen Bremskraftverstärkers ist jedoch mit mehreren Nachteilen verbunden. Beispielsweise führt das Bereitstellen einer Unterstützungskraft Fu ≠ 0 bei einem Fahrzeugstillstand und/oder bei einem Aktivieren eines weiteren Zusatz-Bremsmoments, welches zusätzlich zu dem über die Gesamtbremskraft Fg bereitgestellten Gesamtbremsmoment auf mindestens eines der Räder des Fahrzeugs wirkt, in der Regel zu einem unnötigen Energieverbrauch des Bremssystems. Des Weiteren kann ein Vibrieren des dritten Verstellwegs s3, beispielsweise bei einem Betreiben einer Pumpe des Bremssystems, aufgrund der Verbiegbarkeit des Koppelelements ein entsprechendes Vibrieren des ersten Verstellwegs s1 bewirken. Die damit verbundene Bewegung des Betätigungselements ist für den Fahrer häufig irritierend. Es ist deshalb wünschenswert, über ein bremskraftverstärktes Bremssystem mit einem reduzierten Energieverbrauch und/oder einem verbesserten Bedienkomfort bei einem Betätigen des Betätigungselements zu verfügen.

**EP 2 419 310 B1**

Offenbarung der Erfindung

Die Erfindung schafft ein Verfahren zum Betreiben eines bremskraftverstärkten Bremssystems eines Fahrzeugs mit den Merkmalen des Anspruchs 1 und eine Steuervorrichtung für ein bremskraftverstärktes Bremssystem eines Fahrzeugs mit den Merkmalen des Anspruchs 10.
Durch die Anpassung der Unterstützungskraft an den Betriebsmodus ist der Energieverbrauch des Bremskraftverstärkers reduzierbar. Gleichzeitig bleibt die Bremskraftverstärkung regelbar. Insbesondere kann über die vorliegende Erfindung eine Rückwirkung einer aktivierten Pumpe des bremskraftverstärkten Bremssystems und/oder eines verblendeten Zusatz-Bremsmoments auf eine Stellung des Betätigungselements des bremskraftverstärktes Bremssystems unterbunden werden. Ebenso können über die vorliegende Erfindung anstelle der aktivierten Pumpe eine Ventil-AktivierungNentilbetätigung und/oder ein Schalten der EV (beispielsweise eine EV-Aktivierung) kompensiert werden. Somit sind die beim Stand der Technik auftretenden Störungen durch eine aktivierte Pumpe und/oder ein geschaltetes Ventil, welche herkömmlicherweise das Pedalgefühl negativ beeinflussen, behebbar. Das erfindungsgemäße Verfahren und die entsprechende Steuervorrichtung sind nicht nur für ein Verblenden eines zusätzlichen Bremsmoments, sondern auch in einem ABS-Manöver einsetzbar.
Dies gewährleistet einen verbesserten Bedienkomfort bei einem Betätigen des Betätigungselements für den Fahrer.
Das erfindungsgemäße Verfahren und die korrespondierende Steuervorrichtung sind an einem kostengünstigen Bremssystem mit einem einfachen Aufbau anwendbar. In der Regel wird zum Ausführen des Verfahrens und zum Verwenden der Steuervorrichtung keine zusätzliche Sensorik des Bremssystems benötigt.
Vorteilhafte Ausführungsformen des Verfahrens sind in den Unteransprüchen beschrieben. Entsprechende Ausführungsformen der Steuervorrichtung sind ebenfalls möglich.

Kurze Beschreibung der Zeichnungen

Weitere Merkmale und Vorteile der vorliegenden Erfindung werden nachfolgend anhand der Figuren erläutert.
Es zeigen:

Fig. 1A und B    schematische Darstellungen zum Erläutern der Funktionsweise eines herkömmlichen Bremskraftverstärkers;

Fig. 2    ein Flussdiagramm zum Darstellen einer ersten Ausführungsform des Verfahrens;

Fig. 3A bis D    schematische Darstellungen eines Kopplungsmechanismus eines Bremssystems zum Darstellen einer zweiten Ausführungsform des Verfahrens; und

Fig. 4    ein Bremssystem, mit welchem Weiterbildungen des Verfahrens ausführbar sind.

Ausführungsformen der Erfindung

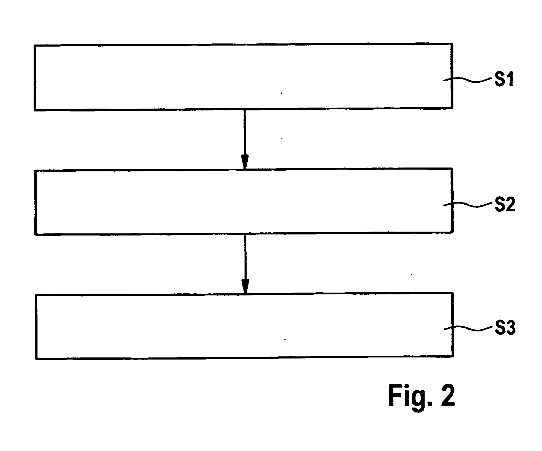

Fig. 2 zeigt ein Flussdiagramm zum Darstellen einer ersten Ausführungsform des Verfahrens.
In einem Verfahrensschritt S1 wird überprüft, ob bei einem vorliegenden Betriebsmodus eines über das Verfahren betriebenen bremskraftverstärkten Bremssystems ein auf mindestens ein Rad des Fahrzeugs ausgeübtes Gesamtbremsmoment mit einem vorgegebenen Soll-Gesamtbremsmoment übereinstimmt und/oder eine Verschiebung eines Bremsmediumvolumens in ein Kraft-Druck-Umwandlungselement ausgeführt wird. Beispielsweise kann dabei das Gesamtbremsmoment gemessen und anschließend mit dem vorgegebenen Soll-Gesamtbremsmoment verglichen werden. Entsprechend kann auch über einen Drucksensor das in das Kraft-Druck-Umwandlungselement verschobene Bremsmediumvolumen festgestellt werden.
Als Alternative dazu kann in Verfahrensschritt S1 ermittelt werden, ob in dem Betriebsmodus des bremskraftverstärkten Bremssystems zusätzlich zu dem ausgeübten Gesamtbremsmoment ein Zusatz-Bremsmoment, beispielsweise ein Generator-Bremsmoment, aktiviert wird. Somit kann auch indirekt ein Abweichen des Gesamtbremsmoments von dem vorteilhaften Soll-Gesamtbremsmoment festgestellt werden.
Des Weiteren kann in einem vorausgehenden (nicht skizzierten) Verfahrensschritt ein Stillstand des Fahrzeugs mit dem bremskraftverstärkten Bremssystems ermittelt werden. Sofern das Fahrzeug bereits steht, wird ein Soll-Gesamtbremsmoment reduziert. Beispielsweise kann das Soll-Gesamtbremsmoment auf Null gesetzt werden. Ebenso kann das Soll-Gesamtbremsmoment auf einen Wert gesetzt werden, bei welchem ein unerwünschtes Wegrollen des Fahrzeugs auch bei einer Steigung gewährleistet ist. In dem anschließenden Verfahrensschritt S1 wird (bei dem reduzierten Soll-Gesamtbremsmoment) überprüft, ob in dem Betriebsmodus des bremskraftverstärkten Bremssystems das ausgeübte Gesamtbremsmoment signifikant von dem reduzierten Soll-Gesamtbremsmoment abweicht.

Auch die Verschiebung des Bremsmediumvolumens, beispielsweise eines Bremsflüssigkeitvolumens oder eines Bremsgasvolumens, in das Kraft-Druck-Umwandlungselement kann in Verfahrensschritt S1 indirekt erfolgen, indem ermittelt wird, ob in dem aktivierten Betriebsmodus des bremskraftverstärkten Bremssystems eine Pumpe des bremskraftverstärkten Bremssystems in einen Pumpmodus geschaltet ist, in welchem ein Bremsmediumvolumen in das Kraft-Druck-Umwandlungselement verschoben wird. Die Pumpe kann beispielsweise eine Rückförderpumpe sein.

Wird in dem Verfahrensschritt S1 festgestellt, dass eine Bremsmomentdifferenz zwischen dem ausgeübten Gesamtbremsmoment und dem vorgegebenen Soll-Gesamtbremsmoment größer als eine vorgegebene Bezugsdifferenz ist und/oder dass das in das Kraft-Druck-Umwandlungselement verschobene Bremsmediumvolumen größer als ein vorgegebenes Bezugsvolumen ist, so folgt der Verfahrensschritt S2. Ansonsten wird das Verfahren beendet. Die vorgegebene Bezugsdifferenz und/oder das vorgegebene Bezugsvolumen können gleich Null sein. In diesem Fall entfallen ein Vergleich der Bremsmomentdifferenz mit der Bezugsdifferenz und/oder ein Vergleich des verschobenen Bremsmediumvolumens mit dem Bezugsvolumen. Als Alternative dazu können die Bezugsdifferenz und/das Bezugsvolumen abhängig von einem Fahrzeugzustand, einem Fahrzeugbetriebsmodus und/oder einem Umgebungszustand vorgegeben werden.

In dem nachfolgenden Verfahrensschritt S2 wird bezüglich einer von einem Bremskraftverstärker des bremskraftverstärkten Bremssystems bereitgestellten Unterstützungskraft eine Soll-Unterstützungskraftänderung unter Berücksichtigung der Bremsmomentdifferenz und/oder des verschobenen Bremvsmediumvolumens festgelegt. Die Soll-Unterstützungskraftänderung kann beispielsweise vom Betriebsmodus abhängig sein. Vorzugsweise erfolgt das Festlegen der Soll-Unterstützungskraftänderung so, dass aufgrund der Änderung eines von dem Bremskraftverstärker erzeugten Bremskraftverstärker-Bremsmoments das aktualisierte Gesamtbremsmoment gleich dem vorgegebenen Soll-Gesamtbremsmoment ist. Beispielsweise entspricht die Änderung des Bremskraftverstärker-Bremsmoments dem Zusatz-Bremsmoment. Bevorzugterweise wird bei einem verschobenen Bremsmediumvolumen größer als dem vorgegebenen Bezugsvolumen die Soll-Unterstützungskraftänderung so festgelegt, dass die Soll-Unterstützungskraftänderung einer durch das verschobene Bremsmediumvolumen bewirkten Verstellkraft auf eine verstellbare Komponente des Kraft-Druck-Umwandlungselements, an welche der Bremskraftverstärker direkt oder indirekt gekoppelt ist, entspricht.

In einem weiteren Verfahrensschritt S3 wird die festgelegte Soll-Unterstützungskraftänderung an den Bremskraftverstärker bereitgestellt. Dabei wird der Bremskraftverstärker insbesondere so angesteuert, dass die Soll-Unterstützungskraftänderung durch den Bremskraftverstärker ausgeführt wird.

Über das Ändern der von dem Bremskraftverstärker bereitgestellten Unterstützungskraft entsprechend der Soll-Unterstützungskraftänderung kann somit ein Zusatz-Bremsmoment durch Änderung des von dem Bremskraftverstärker erzeugten Bremskraftverstärker-Bremsmoments so verblendet werden, dass ein bevorzugtes Gesamtbremsmoment entsprechend dem Soll-Gesamtbremsmoment eingehalten wird. Dies ist insbesondere bei einem zeitlich variierenden Zusatz-Bremsmoment vorteilhaft. Ebenso kann über die Unterstützungskraftänderung entsprechend der Soll-Unterstützungskraftänderung die durch das verschobene Bremsmediumvolumen bewirkte Verstellkraft kompensiert werden, welche andernfalls eine Stellung eines an die verstellbare Komponente des Kraft-Druck-Umwandlungselements direkt oder indirekt gekoppelten Betätigungselements beeinflussen könnte und somit zu einer für einen Fahrer irritierenden Bewegung des Betätigungselements führen könnte.

Das in den oberen Absätzen beschriebene Verfahren ist vor allem bei einem rekuperativen Bremsen, bei welchem ein Teil der Bewegungsenergie des Fahrzeugs in elektrische Energie umgewandelt wird, vorteilhaft. Das Generatormoment, welches ein zusätzliches Abbremsen des Fahrzeugs bewirkt, ist in der Regel abhängig von einer Geschwindigkeit des Fahrzeugs. Somit verändert sich das Generatormoment während der Bremsung. Diese trotz einer konstanten Betätigung des Bremspedals auftretenden stark schwankenden Verzögerungen des Fahrzeugs sind für den Fahrer oft irritierend.

Aus dem Stand der Technik ist es bekannt, eine Anpassung des Gesamtbremsmoments an das Generatormoment und ein Konstanthalten eines Pedalwegs zu realisieren, indem das Betätigungselement vollständig von dem Hauptbremszylinder entkoppelt wird. In diesem Fall wird das Betätigungselement an einen Pedalwegsimulator angeschlossen, während der Druckaufbau in der hydraulischen Bremsanlage lediglich durch eine extern bereitgestellte Bremskraft bewirkt wird. Allerdings ist eine vollständige Entkopplung des Bremspedals von dem Hauptbremszylinder riskant, da der Fahrer bei einem Ausfall der die Bremskraft bereitstellenden Komponente das Entfallen der Bremskraft nicht durch die Fahrerbremskraft überbrücken kann.

Das in den oberen Absätzen beschriebene Verfahren ist auch bei einer mechanischen Kopplung des Betätigungselements an den Hauptbremszylinder ausführbar, und gewährleistet somit einen verbesserten Sicherheitsstandard des über das Verfahren betriebenen bremskraftverstärkten Bremssystems.

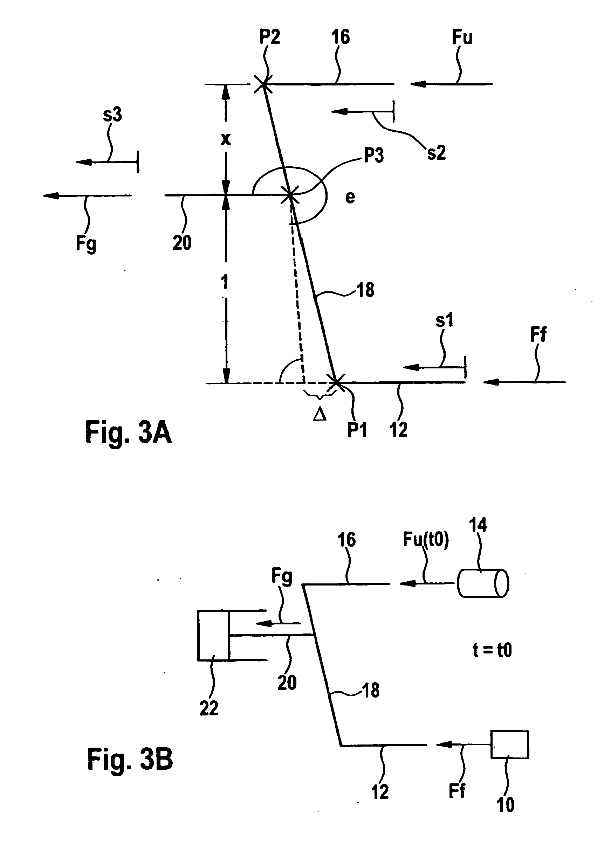

Fig. 3A bis D zeigen schematische Darstellungen eines Kopplungsmechanismus eines Bremssystems zum Darstellen einer zweiten Ausführungsform des Verfahrens.

Der dargestellte Kopplungsmechanismus umfasst die schon beschriebenen Komponenten 10 bis 22. Es wird jedoch darauf hingewiesen, dass die Ausführbarkeit des Verfahrens nicht auf einen derartigen Kopplungsmechanismus beschränkt ist. Beispielsweise kann anstelle der Reaktionsscheibe 18 auch ein anderes Bremskraftverstärker-Betätigungselement-Koppelelement zum Addieren der Fahrerbremskraft Ff und der Unterstützungskraft Fu zu der Gesamtbremskraft Fg eingesetzt werden. Dabei kann die Gesamtbremskraft Fg noch mindestens eine zusätzliche Kraft, auf welche im Folgenden nicht eingegangen wird, umfassen. Des Weiteren ist die Ausführbarkeit des Verfahrens nicht auf eine bestimmte Ausführungsform eines mit einem Bremsgas oder einer Bremsflüssigkeit gefüllten Bremskreises beschränkt. Beispielsweise sind verschiedene Alternativmöglichkeiten bezüglich des Volumenmanagements im Bremssystem denkbar.

Der Bremskraftverstärker 14 kann beispielsweise ein elektromechanischer Bremskraftverstärker, ein elektrischer Bremskraftverstärker, ein Vakuum-Bremskraftverstärker und/oder ein hydraulischer Bremskraftverstärker sein. Selbstverständlich können auch mehrere Bremskraftverstärker 14 zum Bereitstellen der Unterstützungskraft Fu eingesetzt werden. Der Bremskraftverstärker 14 ist vorzugsweise für eine regelbare Bremskraftunterstützung ausgelegt. Bevorzugterweise ist der Bremskraftverstärker 14 dazu ausgelegt, die Unterstützungskraft Fu als Funktion von der Fahrerbremskraft Ff und/oder dem ersten Verstellweg s1 festzulegen. Dem Fachmann ist damit nahegelegt, dass die Ausführbarkeit des Verfahrens nicht auf einen bestimmten Typ des Bremskraftverstärkers 14 beschränkt ist.

Fig. 3A zeigt ein Ersatzmodell zum Darstellen einer Deformation der Reaktionsscheibe 18 bei einer Fahrerbremskraft Ff ≠ 0 und einer Unterstützungskraft Fu ≠ 0. Die Punkte P1 bis P3 entsprechen Flächen auf der Reaktionsscheibe 18. Wird der Punkt P1 im Bezug auf den Punkt P3 um eine Verbiegegröße Δ der Reaktionsscheibe 18 verstellt, so gilt:

$$(Gl\ 1) \qquad s1 = s3 + \Delta$$

Ein Verstellen des Ausgangskolbens 20 um den dritten Verstellweg s3 bewirkt somit in der Regel ein Verstellen des Eingangskolbens 12 und des Betätigungselements 10 um den ersten Verstellweg s1.

Aus dem Momentengleichgewicht an der Reaktionsscheibe 18 erhält man:

$$(Gl\ 2) \qquad \Delta * e = Ff - x * Fu$$

Durch Einsetzten der Gleichung (Gl 2) in die Gleichung (Gl 1) erhält man deshalb:

$$(Gl\ 3) \qquad s1 = s3 + (Ff - x * Fu)/e$$

Die Relation entsprechend der Gleichung (Gl 3) zwischen dem ersten Verstellweg s1 des Betätigungselements 10 und dem dritten Verstellweg s3 des Ausgangskolbens 20 führt herkömmlicherweise häufig zu einer Beeinträchtigung des Betätigungskomforts des Betätigungselements 10. Beispielsweise kann aufgrund der Relation eine Druckänderung in dem Kraft-Druck-Umwandlungselement und/oder in dem Bremskreis zu einer für den Fahrer irritierenden Bewegung des Betätigungselements 10 führen. Über das nachfolgend beschriebene Verfahren ist dieser Nachteil unterbindbar.

Fig. 3B zeigt den Kopplungsmechanismus mit den Komponenten 10 bis 22 zu einem Zeitpunkt t = t0 vor einem Beginn des Verfahrens. Der Anschaulichkeit wegen wird nachfolgend davon ausgegangen, dass der Fahrer zum Zeitpunkt t0 und während des gesamten Verfahrens auf das Betätigungselement 10 eine zeitlich konstante Fahrerbremskraft Ff und einen zeitlich konstanten ersten Verstellweg s1 ausübt. Entsprechend werden zum Zeitpunkt t0 eine zeitlich konstante Unterstützungskraft Fu und ein zeitlich konstanter zweiter Verstellweg s2 von dem Bremskraftverstärker 14 bereitgestellt. Das im Weiteren beschriebene Verfahren ist jedoch nicht auf eine zeitlich konstante Betätigung des Betätigungselements 10 durch den Fahrer beschränkt.

Auf mindestens ein dem Bremskreis zugeordnetes Rad wirkt somit ein konstantes hydraulisches Bremsmoment Mh proportional zu der Gesamtbremskraft Fg, wobei sich das hydraulische Bremsmoment Mh aus einem Bremsdruck p und einer Konstante C ergibt:

$$(Gl\ 4) \qquad Mh = C * p$$

Zu einem Zeitpunkt t > t0 wird ein Zusatz-Bremsmoment Mz aktiviert. Das Zusatz-Bremsmoment Mz ist beispielsweise ein Generator-Bremsmoment. Anstelle eines Generator-Bremsmoments kann jedoch auch ein anderes Zusatz-Bremsmoment Mz über das beschriebene Verfahren verblendet werden.

Das Gesamtbremsmoment Mg(t > t0) setzt sich somit aus dem hydraulischen Bremsmoment Mh(t > t0) und dem Zusatz-Bremsmoment Mz(t > t0) zusammen:

$$(Gl\ 5) \qquad Mg(t > t0) = Mh(t > t0) + Mz(t > t0),$$

Das im Weiteren beschriebene Verfahren ist auch ausführbar, sofern beispielsweise ein Generator-Bremsmoment reduziert wird und Mz(t > t0) negativ ist.

Trotz des Zusatz-Bremsmoments Mz(t > t0) ≠ 0 ist es wünschenswert, bei einer konstanten Betätigung des Betätigungselements 10 durch den Fahrer ein Gesamtbremsmoment Mg(t > t0) = Mg(t0) einzuhalten. Dazu werden die oben schon beschriebenen Verfahrensschritte S1 bis S3 ausgeführt.

Beispielsweise wird in Verfahrensschritt S2 zuerst eine Druckdifferenz Δp ermittelt, um welche der Bremsdruck p in den Radbremszylindern geändert werden muss, damit das Gesamtbremsmoment Mg(t > t0) = Mg(t0) eingehalten wird.

$$(Gl\ 6) \qquad \Delta p = Mz(t > t0)\ /\ C$$

Vorzugsweise wird der Bremsdruck p über den Vordruck im Hauptbremszylinder 22 um die Druckdifferenz Δp geändert. Dabei ist es vorteilhaft, den Vordruck über eine Änderung der Gesamtbremskraft Fg um eine Soll-Bremskraftänderung ΔFg zu ändern, mit

$$(Gl\ 7) \qquad \Delta Fg = A \ * \ Mz(t > t0)\ /\ C,$$

wobei A einer Fläche eines Kraft-Druck-Umwandlungselements, beispielsweise des Hauptbremszylinders 22, entspricht.

Da eine Änderung der Fahrerbremskraft Ff zum Bewirken der Soll-Bremskraftänderung ΔFg nicht erwünscht ist, wird die von dem Bremskraftverstärker 14 bereitgestellte Unterstützungskraft Fu entsprechend der Soll-Bremskraftänderung ΔFg verändert. Somit gilt für eine Soll-Unterstützungskraftänderung ΔFu:

$$(Gl\ 8) \qquad \Delta Fu = A \ * \ Mz(t > t0)\ /\ C$$

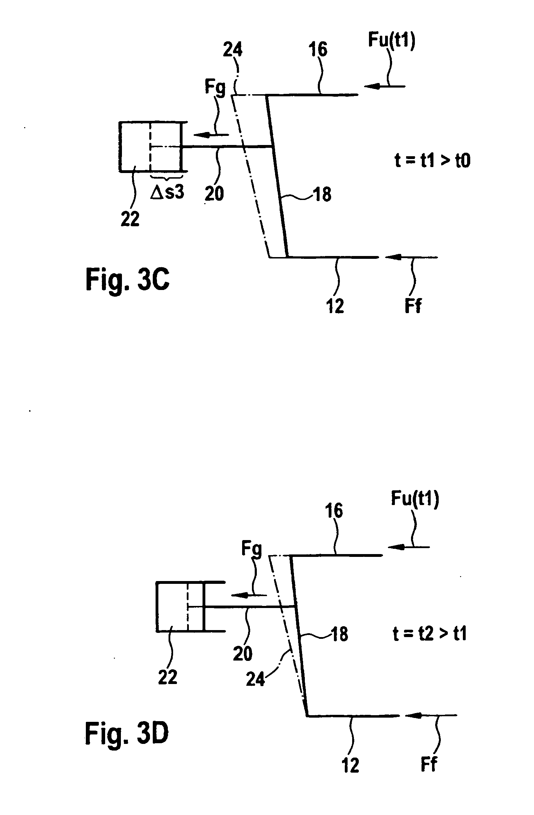

Fig. 3C zeigt den Koppelmechanismus nach dem Ausführen der Verfahrensschritte S1 bis S3 zu einem Zeitpunkt t1 > t0. Somit ist zum Zeitpunkt t1 der Bremsdruck p vorzugsweise so eingestellt, dass das zum Zeitpunkt t1 an mindestens einem Rad anliegende Gesamtbremsmoment Mg(t1) dem Gesamtbremsmoment Mg(t0) zum Zeitpunkt t0 entspricht, d.h. es gilt: Mg(t1) = Mg(t0)

Entsprechend der zeitlich konstanten Fahrerbremskraft Ff wird ein gleichmäßiges Abbremsen des Fahrzeugs eingehalten. Die Unterstützungskraft Fu(t1) zum Zeitpunkt t1 entspricht einer Differenz der Unterstützungskraft Fu(t0) zum Zeitpunkt t0 und der Soll-Unterstützungskraftänderung ΔFu.

Durch ein Absenken des Vordrucks wird automatisch in allen Radbremszylindern des Bremssystems der Bremsdruck p reduziert. Somit macht sich das Absenken des Vordrucks auch auf die nicht an den Generator angeschlossenen Räder bemerkbar. Auf diese Weise ist ein größeres Generatormoment verblendbar.

Allerdings führt eine Änderung der Unterstützungskraft Fu nicht nur zu einer Änderung des Bremsdrucks p, sondern auch zu einer Änderung des Volumens mindestens einer Komponente des Bremssystems, beispielsweise des Hauptbremszylinders 22. Diese Änderung des Volumens der mindestens einen Komponente des Bremssystems wirkt sich unmittelbar auf den dritten Verstellweg s3 aus. Deshalb bewirkt die Soll-Unterstützungskraftänderung ΔFu eine Verschiebung Δs3 des Ausgangskolbens 20.

Um zu verhindern, dass der erste Verstellweg s1 gemäß Gleichung (Gl 3) entsprechend der Verschiebung Δs3 des Ausgangskolbens 20 verändert wird, werden die nachfolgend beschriebenen Verfahrensschritte durchgeführt. Beispielsweise kann auf diese Weise ein Rückstoß des Betätigungselements 10 unterbunden werden.

Des Weiteren wird über die Änderung der Unterstützungskraft Fu entsprechend der Soll-Unterstützungskraftänderung ΔFu die Reaktionsscheibe 18 gemäß Gleichung (GI 2) verformt. (Zur Veranschaulichung ist die "Form" der Reaktionsscheibe 18 zum Zeitpunkt t0 als gestrichelte Linie 24 in die Ersatzmodelle der Fig. 3C und D eingetragen.) Es ist vorteilhaft, auch diesen Effekt bei den weiteren Verfahrensschritten zu berücksichtigen.

In einem weiteren Verfahrensschritt wird eine Druckänderungsgröße bezüglich einer der Soll-Unterstützungskraftänderung ΔFu entsprechenden Druckänderung in dem Kraft-Druck-Umwandlungselement bestimmt. Die Druckänderungsgröße ist beispielsweise eine der Soll-Unterstützungskraftänderung ΔFu entsprechende Volumenänderung V (t0→t1) des Kraft-Druck-Umwandlungselements und/oder die Verschiebung Δs3 des Ausgangskolbens 20, wobei gilt:

$$\text{(GI 9)} \qquad \Delta s3 = V(t0 \to t1)/ \; A$$

Die Druckänderungsgröße Δs3 oder V(t0→t1) kann beispielsweise einer DruckVolumen-Kennlinie oder einer Druck-Verschiebungsweg-Kennlinie des Bremskreises entnommen werden.

Zusätzlich wird eine Formänderungsgröße bezüglich einer der festgelegten Soll-Unterstützungskraftänderung entsprechenden Formänderung mindestens eines zwischen dem Bremskraftverstärker und dem Kraft-Druck-Umwandlungselement angeordneten Bremskraftverstärker-Betätigungselement-Koppelelements bestimmt. Die Formänderungsgröße ist beispielsweise die Verbiegegröße Δ der Reaktionsscheibe 18.

In einem nachfolgenden Verfahrensschritt wird eine der Druckänderungsgröße und/oder der Formänderungsgröße entsprechende Soll-Volumenänderung/Soll-Druckänderung in dem Kraft-Druck-Umwandlungselement festgelegt. Vorzugsweise wird dabei eine Soll-Volumenänderung ΔV ermittelt, welche die Druckänderungsgröße Δs3 oder V(t0→t1) und/oder die Änderung der Verbiegegröße Δ bis zum Zeitpunkt t2 kompensiert.

Insbesondere kann dabei gelten:

$$\text{(GI 10)} \qquad s1(t2) = s1(t0)$$

Anhand der vorhergehenden Gleichungen (GI 1) bis (GI 3) lässt sich beispielsweise als Soll-Volumenänderung ΔV festlegen:

$$\text{(GI 11)} \qquad \Delta V = A * (\Delta s3 + x * \Delta Fu / C),$$

Somit kann bei der Festlegung von der Soll-Volumenänderung ΔV berücksichtigt werden, dass die Änderung der Unterstützungskraft entsprechend der Soll-Unterstützungskraftänderung ΔFu eine Änderung der Volumenaufnahme des Bremssystems um V(t0→t1) oder Δs3 bewirkt, und (aufgrund der Elastizität e der Reaktionsscheibe 18) eine Deformation der Reaktionsscheibe 18 auslöst. Die beiden Effekte sind gegenläufig, weshalb beispielsweise ein positives Δs3 zu einem negativen Term (x * ΔFu/ C) führt.

Wie der Fachmann erkennt, werden bei dem hier beschriebenen Verfahren die Konstanthaltung der Verzögerung des Fahrzeugs und die Konstanthaltung des ersten Verstellwegs s1 entkoppelt und unabhängig voneinander durchgeführt.

In einem weiteren Verfahrensschritt wird die festgelegte Soll-Druckänderung, bzw. die festgelegte Soll-Volumenänderung ΔV an mindestens ein Stellelement mindestens eines Bremskreises des bremskraftverstärkten Bremssystems ausgegeben. Ein verwendbares Stellelement ist beispielsweise eine Einrichtung zur Regulierung der Raddrücke. Das Stellelement kann als ABS-System, als ESP-System oder als Bypassventil bereits an einem herkömmlichen Bremssystem vorhanden sein. Diese Multifunktionalität des Stellelements ermöglicht ein kostengünstiges Ausführen des hier beschriebenen Verfahrens. Des Weiteren kann die Druckverteilung mittels des ESP-Systems oder des ABS-Systems auch rad- und achsindividuell erfolgen.

Um nicht nur die Verzögerung des Fahrzeugs, sondern auch den ersten Verstellweg s1 bei gleicher Fahrerbremskraft Ff zeitlich konstant zu halten, ist es vorteilhaft, die gemäß Gleichung (GI 11) berechnete Soll-Volumenänderung ΔV über eine Verschiebung eines Bremsmediums in eine Speicherkammer oder aus der Speicherkammer des Bremssystems zu realisieren. In einem ABS-System oder in einem ESP-System kann ein Abbau eines der Soll-Volumenänderung ΔV entsprechenden Bremsmediumvolumens in die vorhandene Speicherkammer über die Auslassventile ausgeführt werden. Eine Rückförderung eines Bremsmediumvolumens kann über die Rückförderpumpe erreicht werden.

Wie der Fachmann jedoch erkennen kann, ist die Ausführbarkeit des hier beschriebenen Verfahrens nicht auf ein ABS-System oder auf ein ESP-System beschränkt. Ebenso kann eine elektrische Handbremse zur Ausführung des hier beschriebenen Verfahrens herangezogen werden. Neben Bypass-Ventilen, über welche ein Bremsmediumvolumen aus dem Bremssystem in ein Bremsmediumreservoir ableitbar ist, sind auch entsprechende Modifikationen an dem Hauptbremszylinder 22 denkbar. Vorzugsweise sind diese mittels eines ESP-Systems, eines Bremskraftverstärkers und/oder eines Generators ansteuerbar.

Fig. 3D zeigt den Koppelmechanismus zum Zeitpunkt t2 nach einem Ausführen der Soll-Volumenänderung ΔV durch eine für eine Umverteilung des Bremsmediums in dem Bremskreis geeignete Komponente des Bremssystems. Dabei entspricht der Verstellweg s1 (t2) zum Zeitpunkt t2 vorzugsweise dem zum Zeitpunkt t0 vorgegebenen Verstellweg s1(t0), d.h. es gilt: s1(t2) = s1 (t0).

Somit ist über das Ausführen des beschriebenen Verfahrens trotz des Zusatz-Bremsmoments Mz ungleich Null bei einer zeitlich konstanten Fahrerbremskraft Ff auch ein zeitlich konstanter Verstellweg s1 gewährleistet. Der Fahrer merkt somit nichts von der Aktivierung des Zusatz-Bremsmoments Mz. Das in den oberen Absätzen beschriebene Verfahren gewährleistet somit einen verbesserten Fahrkomfort für den Fahrer.

Wie der Fachmann erkennt, können die in den oberen Absätzen beschriebenen Verfahrensschritte so schnell ausgeführt werden, dass das Zeitintervall zwischen den Zeitpunkten t0 und t2 gegen Null geht. Damit bleibt der erste Verstellweg s1 zeitlich konstant.

Bei der oben beschriebenen Ausführungsform des Verfahrens ergibt sich der Rekuperationsgrad (Prozentsatz der möglichen Rekuperationsfähigkeit) des Bremssystems aus einem Verstärkungsfaktor f, sofern gilt:

$$(\text{Gl } 12) \qquad F_u = f * F_f$$

Bei einer maximalen Rekuperation wird die Unterstützungskraft Fu auf null reduziert und lediglich die Fahrerbremskraft Ff bremst in das Bremssystem ein. Somit kann man die Gesamtbremskraft Fg maximal um den Betrag Fg*f/(f +1) reduzieren. Verstärkt der Bremskraftverstärker beispielsweise die Fahrerbremskraft Ff um einen Faktor 5, d.h. ist der Faktor f gleich 4, so ist bei einem konstanten Gesamtbremsmoment Mg maximal ein Zusatz-Bremsmoment Mz gleich 0.8 Mg verblendbar. Der Rekuperationsgrad liegt damit bei 80%.

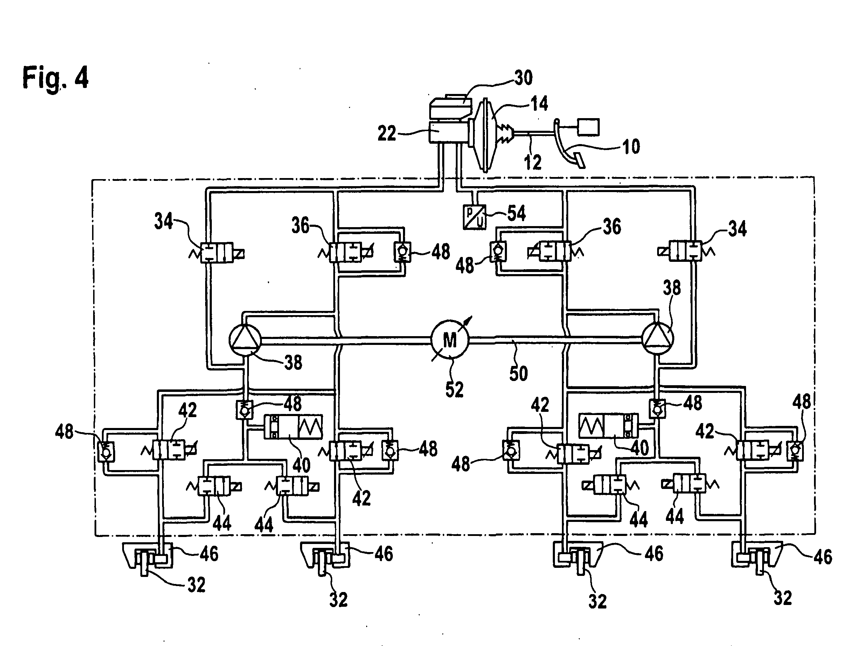

Fig. 4 zeigt ein Bremssystem, mit welchem Weiterbildungen des Verfahrens ausführbar sind.

Das Bremssystem umfasst ein Betätigungselement 10, einen Eingangskolben 12, einen Bremskraftverstärker 14, ein Bremsmediumreservoir 30 und einen Hauptbremszylinder 22, an welchem zwei Bremskreise angekoppelt sind. Jeder der Bremskreise ist zum Abbremsen zweier Räder 32 ausgebildet. Somit umfasst jeder der Bremskreise ein Ansaugventil (Hauptschaltventil) 34, ein Umschaltventil 36, eine Rückförderpumpe 38, eine Speicherkammer 40, zwei Radeinlassventile 42, zwei Radauslassventile 44 und zwei Radbremszylinder 46. Anstelle von Schaltventilen können stetig einstellbare (regelbare) Auslassventile 44 verwendet werden. Dies minimiert die beim Schalten der Auslassventile 44 auftretenden Geräusche und verbessert die Dosierbarkeit bei einem Druckabbau. Parallel zu jedem Umschaltventil 36 und Radeinlassventil 42 ist je ein Rückschlagventil 48 angeordnet. Je ein weiteres Rückschlagventil 48 ist zwischen einer Rückförderpumpe 38 und einer Speicherkammer 40 eingesetzt. Die beiden Rückförderpumpen 38 sitzen auf einer Welle 50 eines Motors 52.

Mindestens in einem der beiden Bremskreise ist ein Drucksensor 54 angeordnet. Mittels des Drucksensors 54 kann beispielsweise ein Hauptbremszylinder-Druck, ein Kreisdruck, ein Raddruck, ein Speicherkammerdruck und/oder ein Speicherkammervolumen gemessen werden. Der Drucksensor 54 ist vorzugsweise ein Hauptbremszylinder-Drucksensor oder ein Kreisdrucksensor. Anstelle eines Messens eines Druckwerts kann der Druckwert auch berechnet oder geschätzt werden.

Bei den oben beschriebenen Verfahren lässt sich ein Zusatz-Bremsmoment nur so lange verblenden, bis die Unterstützungskraft auf Null reduziert ist. Der Verstärkungsfaktor des Bremskraftverstärkers 14 definiert dabei den Rekuperationsgrad.

Bei der nachfolgend beschriebenen Weiterbildung wird unter Berücksichtigung des zu verblendenden Zusatz-Bremsmoments nicht nur die Soll-Unterstützungskraftänderung, sondern auch eine Soll-Bremsdruckänderung festgelegt. Auf diese Weise ist ein höherer Rekuperationsgrad des Bremssystems (bis zu 100 %) realisierbar, bzw. ein größeres Zusatz-Bremsmoment verblendbar.

Nachfolgend werden zwei mögliche Vorgehensweisen zum Verblenden eines Zusatz-Bremsmoments, welches größer als ein durch die Unterstützungskraft erzeugbares (hydraulisches) Bremsmoment ist, beschrieben:

Bei einer ersten Vorgehensweise wird eines der oben beschriebenen Verfahren so lange ausgeführt, bis die Unterstützungskraft auf Null reduziert ist, d. h. bis der Druck im Bremssystem allein durch die Fahrerbremskraft aufgebracht wird. Zum weiteren Verblenden wird eine zusätzliche Druckreduktion an den Rädern ausgeführt. Dies kann unter Verwendung eines ABS-Systems oder eines ESP-Systems erfolgen. Beispielsweise erfolgt die Druckreduktion an den Rädern durch Schließen der Einlassventile 42 und Abbau des Raddrucks über die Auslassventile 44. Dabei kann das Bremsmedium in die Speicherkammern 40 verschoben werden. Durch das Schließen der Einlassventile 42 ist gewährleistet, dass eine Volumenverschiebung zwischen den Einlassventilen 42 und dem Hauptbremszylinder 22 unterbunden ist. Die zusätzliche Druckreduktion führt somit nicht zu einem Verstellen/Vibrieren des Betätigungselements 10. Der das Betätigungselement 10 betätigende Fahrer bemerkt somit die zusätzliche Druckreduktion nicht.

Vorzugsweise findet die zusätzliche Druckreduktion in einem Druckbereich statt, der deutlich kleiner als ein der Fahrerbremskraft entsprechender Bremsdruck ist. Somit muss das Bremsregelsystem, welches für die zusätzliche Rekuperation verwendet wird, nur für diese minimalen Druck- und Volumenbereiche ausgelegt sein. Stellt der Bremskraftverstärker beispielsweise eine Unterstützungskraft bereit, welche viermal so hoch wie die Fahrerbremskraft ist, so müssen maximal 20 % der Gesamtbremskraft über die zusätzlich Rekuperation verblendet werden. Geht man davon aus, dass die zusätzliche Rekuperation nur bei maximal 100 bar eingesetzt wird, so wird lediglich ein Hauptzylinderdruck von maximal 20 bar aufgebaut.

Bei einer zweiten Vorgehensweise können die Einlassventile 42 schon vor dem Reduzieren der Unterstützungskraft auf Null in einen (geregelten) Betriebsmodus geschaltet werden, in welchem Differenzdrücke bzw. Volumenströme durch die Einlassventile 42 regelbar/steuerbar sind. Beispielsweise werden die Einlassventile 42 in die "delta-p-Regelung" geschaltet. Auf diese Weise kann die Rückwirkung der Volumenverschiebung auf das Betätigungselement 10 deutlich reduziert werden. Somit ist gewährleistet, dass das Schließen der Einlassventile 42 weder ein Geräusch noch eine Rückwirkung auf das Betätigungselement 10 auslöst. Anstelle des harten Übergangs, welcher bei der ersten Vorgehensweise bei einem Schließen der Einlassventile 42 (bei einer Unterstützungskraft gleich Null) auftreten kann, ist somit bei der zweiten Vorgehensweise ein weicher Übergang realisierbar.

Vorzugsweise werden die Einlassventile 42 erst bei einer Reduzierung der Unterstützungskraft auf Null vollständig geschlossen, um einen zeitlich konstanten ersten Verstellweg des Betätigungselements 10 zu gewährleisten. Selbstverständlich kann das Schließen der Einlassventile 42 jedoch schon vor der Reduzierung der Unterstützungskraft auf Null erfolgen. In diesem Fall kann der Bremskraftverstärker während des weiteren Verblendens des Zusatz-Bremsmoments eine Restkraft bereitstellen.

Nachfolgend werden Möglichkeiten zum Wiederaufbauen des hydraulischen Bremsmoments, welches aufgrund des Zusatz-Bremsmoments reduziert wird, beschrieben. Dabei wird davon ausgegangen, dass das Zusatz-Bremsmoment reduziert oder deaktiviert wird und zum Einhalten eines bevorzugten Gesamtbremsmoments somit ein größeres hydraulisches Bremsmoment vorteilhaft ist.

Zuerst wird die für das weitere Verblenden ausgeführte zusätzliche Druckreduktion an den Rädern rückgängig gemacht. Der Druck im Bremssystem wird somit (wieder) aufgebaut. Dies geschieht, indem das zuvor verschobene Volumen des Bremsmediums wieder in das Bremssystem zurückgefördert wird. Vorteilhafterweise werden zum Herauspumpen des verschobenen Bremsmediums aus der Speicherkammer 40 die Rückförderpumpen 38 eingesetzt. Über eine geeignete Regelung/Steuerung der Rückförderpumpen 38, der Einlassventile 42 und der Auslassventile 44 kann der Druckaufbau in einem Radbremszylinder 46 derart stattfinden, dass der Druckaufbau einem zeitgleichen Reduzieren des Zusatz-Bremsmoments entspricht. Auf diese Weise ist ein zeitlich konstantes Gesamtbremsmoment gewährleistet.

Vor dem Ausführen dieses Verfahrensschritts kann ermittelt werden, ob ein Druck zwischen dem Hauptbremszylinder 22 und den Einlassventilen 42 von dem Radbremsdruck abweicht. Bei einer derartigen Situation ist es vorteilhaft, das Bremssystem derart anzusteuern, dass das Bremsmediumvolumen zwischen dem Hauptbremszylinder 22 und den Einlassventilen 42 nicht verändert wird, um eine Rückwirkung eines verschobenen Bremsmediumvolumens auf das Betätigungselement 10 zu unterbinden. Bevorzugterweise werden die Rückförderpumpen 38, die Einlassventile 42 und/oder die Auslassventile 44 so angesteuert, dass ein verschobenes Bremsmediumvolumen lediglich einen Druckaufbau in den Radbremszylindern 46 bewirkt. Dies ist leicht ausführbar, sofern der Druck zwischen dem Hauptbremszylinder 22 und den Einlassventilen 42 größer als der Raddruck ist, und somit das Bremsmediumvolumen über die Einlassventile 42 zu den Radbremszylindern 46 verschiebbar ist.

In einem weiteren Verfahrensschritt kann der Wiederaufbau des hydraulischen Bremsmoments durch ein Steigern der von dem Bremskraftverstärker bereitgestellten Unterstützungskraft erfolgen. Insbesondere kann die Steigerung des hydraulischen Bremsmoments dabei ohne Druckmanagement im Bremssystem erfolgen.

Ein möglicher Nachteil bei einem Druckaufbau durch Betreiben der Rückförderpumpen 38 liegt darin, dass die Rückförderpumpen 38 häufig einen pulsierenden Volumenstrom erzeugen. Dieser pulsierende Völumenstrom bewirkt oft ein Vibrieren des Betätigungselements 10, welches in der Regel für den Fahrer irritierend ist. Allerdings ist dieses Problem über eine Entkopplung der Rückförderpumpen 38 von dem Hauptbremszylinder 22 derart, dass ein Volumenstrom von einer Rückförderpumpe 38 an den Hauptbremszylinder 22 unterbunden ist, behebbar. Beispielsweise kann bei einem ESP-System die vorteilhafte Entkopplung der Rückförderpumpe 38 von dem Hauptbremszylinder 22 über das Umschaltventil 36 erreicht werden. Alternativ zu einem Umschaltventil 36 kann auch ein anderes, entsprechendes Trennventil zwischen einem Einlassventil 42 und dem Hauptbremszylinder 22 (auch außerhalb des Bremsregelsystems) eingesetzt werden. Beispielsweise kann ein mit dem zusätzlichen Trennventil ausgestattetes ABS-System zum vorteilhaften Entkoppeln der Rückförderpumpen 38 verwendet werden.

Diese vorteilhafte Weiterbildung des Verfahrens beruht auf der Erkenntnis, dass während der Volumenförderung durch die Rückförderpumpen 38 die Rückwirkungen auf das Betätigungselement über ein Ansteuern eines Trennventils unterbindbar sind. Beispielsweise ist die Unterstützungskraft auf Null reduziert und die Einlassventile 42 sind geschlossen. Um bei einer derartigen Situation eine Rückwirkung des Volumenaufbaus mittels der Rückförderpumpen 38 auf das Betätigungselement 10 zu minimieren, kann das Umschaltventil 36 geschlossen werden. Vor Beginn der Volumenförderung ist in diesem Fall der Druck zwischen dem Hauptbremszylinder 22 und dem Umschaltventil 36 gleich dem Druck zwischen dem Umschaltventil 36 und dem Einlassventil 42. Bei einsetzender Volumenförderung wird Druck bzw. Volumen im Bremskreis zwischen dem Umschaltventil 36 und Einlassventil 42 aufgebaut, da beide Ventile 36 und 42 geschlossen sind. Der Druck bzw. das Volumen zwischen dem Umschaltventil 36 und dem Hauptbremszylinder 22 ändert sich nicht. Rückwirkungen auf das Betätigungselement 10 sind damit unterbunden.

Der Übergang von dem geschlossenen Umschaltventil 36 zu dem geöffneten Umschaltventil 36 kann als ein einfaches Öffnen (vollständiges Entstromen) des Umschaltventils 36 oder über eine Übergangsphase (delta-p-Regelung) erfolgen.

Des Weiteren besteht die Möglichkeit, zur Kompensierung des pulsierenden Volumenstroms der Rückförderpumpen 38 den Bremskraftverstärker 14 zu verwenden. Dabei wird während einer Volumenförderung durch die Rückförderpumpe 38 die Unterstützungskraft des Bremskraftverstärkers 14 derart variiert, dass sie dem pulsierenden Volumenstrom entgegenwirkt. Auf diese Weise können die Rückwirkungen des pulsierenden Volumenstroms auf das Betätigungselement 10 unterbunden werden.

Auf ein Umschaltventil 36 oder ein ähnliches Trennventil zwischen einer Rückförderpumpe 38 und dem Hauptbremszylinder 22 kann dabei verzichtet werden. Die Kompensierung des pulsierenden Volumenstroms über den Bremskraftverstärker 14 ist somit insbesondere bei einem ABS-System vorteilhaft.

Bevorzugterweise wird bei der Kompensierung des pulsierenden Volumenstroms über den Bremskraftverstärker 14 die Unterstützungskraft nicht auf Null reduziert, damit sowohl eine Erhöhung als auch eine Reduzierung der Unterstützungskraft ausführbar ist. Die Unterstützungskraft kann somit bei jedem Pumpenhub so angepasst werden, dass der Pumpenhub kein Verstellen des Betätigungselements 10 bewirkt. Die Unterstützungskraft arbeitet sozusagen aktiv gegen den pulsierenden Volumenstrom.

Die Reaktion des elastisch ausgebildeten Koppelelements, wie beispielsweise einer Reaktionsscheibe, welche durch die Änderung der Unterstützungskraft bewirkt wird, kann beim Ansteuern der Unterstützungskraft zur Kompensierung des pulsierenden Volumenstroms berücksichtigt werden. Die vorliegende Erfindung ermöglicht somit eine Anpassung der Unterstützungskraft des Bremskraftverstärkers 14 derart, dass eine Rückwirkung einer Pumpe auf ein Betätigungselement eines Bremssystems kompensiert wird.

## Patentansprüche

1. Verfahren zum Betreiben eines bremskraftverstärkten Bremssystems eines Fahrzeugs mit den Schritten:

    Überprüfen eines Betriebsmodus des bremskraftverstärkten Bremssystems hinsichtlich eines Übereinstimmens eines durch das bremskraftverstärkte Bremssystem auf mindestens ein Rad (32) des Fahrzeugs ausgeübten Gesamtbremsmoments (Mg) mit einem vorgegebenen Soll-Gesamtbremsmoment und/oder hinsichtlich einer Verschiebung eines Bremsmediumvolumens des bremskraftverstärkten Bremssystems in ein Kraft-Druck-Umwandlungselement (22) des bremskraftverstärkten Bremssystems (S1);
    sofern eine Bremsmomentdifferenz (Mz) zwischen dem ausgeübten Gesamtbremsmoment (Mg) und dem vorgegebenen Soll-Gesamtbremsmoment größer als eine vorgegebene Bezugsdifferenz ist und/oder das in das Kraft-Druck-Umwandlungselement (22) verschobene Bremsmediumvolumen größer als ein vorgegebenes Bezugsvolumen ist, Festlegen einer vom Betriebsmodus abhängigen Soll-Unterstützungskraftänderung ($\Delta$Fu) bezüglich einer von einem Bremskraftverstärker (14) des bremskraftverstärkten Bremssystems bereitgestellten Unterstützungskraft (Fu) unter Berücksichtigung der Bremsmomentdifferenz (Mz) und/oder des verschobenen Bremsmediumvolumens (S2); und
    Ausgeben der Soll-Unterstützungskraftänderung ($\Delta$Fu) an den Bremskraftverstärker (14) (S3).

2. Verfahren nach Anspruch 1, wobei überprüft wird, ob in dem Betriebsmodus des bremskraftverstärkten Bremssystems zusätzlich zu dem ausgeübten Gesamtbremsmoment (Mg) ein weiteres Bremsmoment (Mz) aktiviert wird, welches größer als die vorgegebene Bezugsdifferenz ist.

3. Verfahren nach Anspruch 2, wobei überprüft wird, ob in dem Betriebsmodus des bremskraftverstärkten Bremssystems als weiteres Bremsmoment (Mz) ein Generator-Bremsmoment (Mz) aktiviert wird, welches größer als die vorgegebene Bezugsdifferenz ist.

4. Verfahren nach einem der vorhergehenden Ansprüche, wobei zusätzlich zu dem Festlegen der Soll-Unterstützungskraftänderung (ΔFu) eine Soll-Bremsdruckänderung unter Berücksichtigung der Bremsmomentdifferenz (Mz) festgelegt wird, und wobei die festgelegte Soll-Bremsdruckänderung an mindestens ein Stellelement (38,42,44) mindestens eines Bremskreises des bremskraftverstärkten Bremssystems ausgegeben wird.

5. Verfahren nach einem der vorhergehenden Ansprüche, wobei bei einem Stillstand des Fahrzeugs ein Soll-Gesamtbremsmoment reduziert wird, und wobei bei dem reduzierten Soll-Gesamtbremsmoment überprüft wird, ob in dem Betriebsmodus des bremskraftverstärkten Bremssystems das ausgeübte Gesamtbremsmoment (Mg) um mindestens die vorgegebene Bezugsdifferenz von dem reduzierten Soll-Gesamtbremsmoment abweicht.

6. Verfahren nach einem der vorhergehenden Ansprüche, wobei eine Druckänderungsgröße (Δs3, V(t0→t1)) bezüglich einer der festgelegten Soll-Unterstützungskraftänderung (ΔFu) entsprechenden Druckänderung in dem Kraft-Druck-Umwandlungselement (22) bestimmt wird.

7. Verfahren nach einem der vorhergehenden Ansprüche, wobei eine Formänderungsgröße (Δ) bezüglich einer der festgelegten Soll-Unterstützungskraftänderung (ΔFu) entsprechenden Formänderung mindestens eines zwischen dem Bremskraftverstärker (14) und dem Kraft-Druck-Umwandlungselement (22) angeordneten Bremskraftverstärker-Betätigungselement-Koppelelements (18) bestimmt wird.

8. Verfahren nach Anspruch 6 oder 7, wobei eine der Druckänderungsgröße (Δs3, V(t0→t1)) und/oder der Formänderungsgröße (Δ) entsprechende Soll-Volumenänderung (ΔV) in dem Kraft-Druck-Umwandlungselement (22) festgelegt wird, und wobei die festgelegte Soll-Volumenänderung (ΔV) an mindestens ein Stellelement (38,42,44) mindestens eines Bremskreises des bremskraftverstärkten Bremssystems ausgegeben wird.

9. Verfahren nach einem der vorhergehenden Ansprüche, wobei überprüft wird, ob in dem Betriebsmodus des bremskraftverstärkten Bremssystems eine Pumpe (38) des bremskraftverstärkten Bremssystems in einen Pumpmodus geschaltet ist, in welchem das in das Kraft-Druck-Umwandlungselement (22) verschobene Bremsmediumvolumen größer als das vorgegebene Bezugsvolumen ist.

10. Steuervorrichtung für ein bremskraftverstärktes Bremssystem eines Fahrzeugs mit:

    einer Sensoreinrichtung, welche dazu ausgelegt ist, einen Betriebsmodus des bremskraftverstärkten Bremssystems hinsichtlich eines Übereinstimmens eines durch das bremskraftverstärkte Bremssystem auf mindestens ein Rad (32) des Fahrzeugs ausgeübten Gesamtbremsmoments (Mg) mit einem vorgegebenen Soll-Gesamtbremsmoment und/oder hinsichtlich einer Verschiebung eines Bremsmediumvolumens des bremskraftverstärkten Bremssystems in ein Kraft-Druck-Umwandlungselement (22) des bremskraftverstärkten Bremssystems zu überprüfen, und, sofern eine Bremsmomentdifferenz (Mz) zwischen dem ausgeübten Gesamtbremsmoment (Mg) und dem vorgegebenen Soll-Gesamtbremsmoment größer als eine vorgegebene Bezugsdifferenz ist und/oder das in das Kraft-Druck-Umwandlungselement (22) verschobene Bremsmediumvolumen größer als ein vorgegebenes Bezugsvolumen ist, eine der Bremsmomentdifferenz (Mz) und/oder dem Bremsmediumvolumen entsprechende Information (Mz) bereitzustellen;
    einer Auswerteeinrichtung, welche dazu ausgelegt ist, eine vom Betriebsmodus abhängige Soll-Unterstützungskraftänderung (ΔFu) bezüglich einer von einem Bremskraftverstärker (14) des bremskraftverstärkten Bremssystems bereitgestellten Unterstützungskraft (Fu) unter Berücksichtigung der bereitgestellten Information (Mz) festzulegen; und
    einer Ausgabeeinrichtung, welche dazu ausgelegt ist, ein der festgelegten Soll-Unterstützungskraftänderung (ΔFu) entsprechendes Steuersignal an den Bremskraftverstärker (14) auszugeben.

11. Bremskraftverstärktes Bremssystem mit einer Steuervorrichtung nach Anspruch 10.

12. Fahrzeug mit einem bremskraftverstärkten Bremssystem nach Anspruch 11.

**Claims**

1. Method for operating a vehicle brake system having a brake booster, having the steps:

    checking an operating mode of the brake system having a brake booster with respect to correspondence of a total braking torque (Mg), applied by the brake system having a brake booster to at least one wheel (32) of the vehicle, to a predefined setpoint total braking torque,

and/or checking with respect to a displacement of a braking medium volume of the brake system having a brake booster into a force/pressure conversion element (22) of the brake system having a brake booster (S1);

if a braking torque difference (Mz) between the applied total braking torque (Mg) and the predefined setpoint total braking torque is larger than a predefined reference difference and/or the braking medium volume which is displaced into the force/pressure conversion element (22) is larger than a predefined reference volume, definition of a change ($\Delta$Fu) in the setpoint assistance force, dependent on the operating mode, with respect to an assistance force (Fu) made available by a brake booster (14) of the brake system having a brake booster, taking into account the braking torque difference (Mz) and/or the displaced braking medium volume (S2); and outputting of the change ($\Delta$Fu) in the setpoint assistance force to the brake booster (14) (S3).

2. Method according to Claim 1, wherein it is checked whether, in addition to the applied total braking torque (Mg), a further braking torque (Mz), which is larger than the predefined reference difference, is activated in the operating mode of the brake system having a brake booster.

3. Method according to Claim 2, wherein it is checked whether a generator braking torque (Mz), which is larger than the predefined reference difference, is activated as a further braking torque (Mz) in the operating mode of the brake system having a brake booster.

4. Method according to one of the preceding claims, wherein, in addition to the definition of the change ($\Delta$Fu) in the setpoint assistance force, a change in the setpoint brake pressure is defined taking into account the braking torque difference (Mz), and wherein the defined change in the setpoint brake pressure is output to at least one actuating element (38, 42, 44) of at least one brake circuit of the brake system having a brake booster.

5. Method according to one of the preceding claims, wherein, in the case of a stationary state of the vehicle, a setpoint total braking torque is reduced, and wherein in the case of the reduced setpoint total braking torque it is checked whether, in the operating mode of the brake system having a brake booster, the applied total braking torque (Mg) differs from the reduced setpoint total braking torque by at least the predefined reference difference.

6. Method according to one of the preceding claims, wherein a pressure change variable ($\Delta$s3, V(t0$\rightarrow$t1)) is determined with respect to a pressure change, corresponding to the defined change ($\Delta$Fu) in the setpoint assistance force, in the force/pressure conversion element (22).

7. Method according to one of the preceding claims, wherein a form change variable ($\Delta$) relating to a change in form, corresponding to the defined change ($\Delta$Fu) in the setpoint assistance force, of at least one coupling element (18), arranged between the brake booster (14) and the force/pressure conversion element (22), of the brake booster actuation element is determined.

8. Method according to Claim 6 or 7, wherein a setpoint volume change ($\Delta$V), corresponding to the pressure change variable ($\Delta$s3, V(t0$\rightarrow$t1)) and/or the form change variable ($\Delta$), in the force/pressure conversion element (22) is defined, and wherein the defined setpoint volume change ($\Delta$V) is output to at least one actuating element (38, 42, 44) of at least one brake circuit of the brake system having a brake booster.

9. Method according to one of the preceding claims, wherein it is checked whether, in the operating mode of the brake system having a brake booster, a pump (38) of the brake system having a brake booster is switched into a pumping mode in which the braking medium volume which is displaced into the force/pressure conversion element (22) is larger than the predefined reference volume.

10. Control device for a vehicle brake system having a brake booster, comprising:

a sensor device which is configured to check an operating mode of the brake system having a brake booster with respect to correspondence of a total braking torque (Mg), applied by the brake system having a brake booster to at least one wheel (32) of the vehicle, to a predefined setpoint total braking torque, and/or with respect to a displacement of a braking medium volume of the brake system having a brake booster into a force/pressure conversion element (22) of the brake system having a brake booster, and, if a braking torque difference (Mz) between the applied total braking torque (Mg) and the predefined setpoint total braking torque is larger than a predefined reference difference and/or the braking medium volume which is displaced into the force/pressure conversion element (22) is larger than a predefined reference volume, making available an item of information (Mz) corresponding to the braking torque difference (Mz) and/or the braking medium volume;

an evaluation device which is configured to define a change (ΔFu) in the setpoint assistance force, dependent on the operating mode, with respect to an assistance force (Fu) made available by a brake booster (14) of the brake system having a brake booster, taking into account the item of information (Mz) which is made available; and

an output device which is configured to output a control signal, corresponding to the defined change (ΔFu) in the setpoint assistance force, to the brake booster (14).

**11.** Brake system having a brake booster, comprising a control device according to Claim 10.

**12.** Vehicle comprising a brake system having a brake booster according to Claim 11.

## Revendications

**1.** Procédé pour faire fonctionner un système de freinage assisté d'un véhicule, comprenant les étapes suivantes :

contrôle d'un mode de fonctionnement du système de freinage assisté en vue d'une concordance entre un moment de freinage total (Mg) exercé par le système de freinage assisté sur au moins une roue (32) du véhicule et un moment de freinage total de consigne prédéfini et/ou en vue d'un déplacement d'un volume de fluide de freinage du système de freinage assisté dans un élément de conversion force/pression (22) du système de freinage assisté (S1) ;

dans la mesure où une différence de moment de freinage (Mz) entre le moment de freinage total (Mg) exercé et le moment de freinage total de consigne prédéfini est supérieure à une différence de référence prédéfinie et/ou le volume de fluide de freinage déplacé dans l'élément de conversion force/pression (22) est supérieur à un volume de référence prédéfini, définition d'une modification de la force d'assistance de consigne (ΔFu) dépendant du mode de fonctionnement concernant une force d'assistance (Fu) mise à disposition par un servofrein (14) du système de freinage assisté en tenant compte de la différence de moment de freinage (Mz) et/ou du volume de fluide de freinage déplacé (S2) ; et

délivrance de la modification de la force d'assistance de consigne (ΔFu) au servofrein (14) (S3).

**2.** Procédé selon la revendication 1, selon lequel il est contrôlé si, dans le mode de fonctionnement du système de freinage assisté, un moment de freinage (Mz) supplémentaire est activé en plus du moment de freinage total (Mg) exercé, lequel est supérieur à la différence de référence prédéfinie.

**3.** Procédé selon la revendication 2, selon lequel il est contrôlé si, dans le mode de fonctionnement du système de freinage assisté, le moment de freinage (Mz) supplémentaire activé est un moment de freinage de générateur (Mz) qui est supérieur à la différence de référence prédéfinie.

**4.** Procédé selon l'une des revendications précédentes, selon lequel une modification de la pression de freinage de consigne est définie en plus de la définition de la modification de la force d'assistance de consigne (ΔFu) en tenant compte de la différence de moment de freinage (Mz), et selon lequel la modification de la pression de freinage de consigne définie est délivrée à au moins un actionneur (38, 42, 44) d'au moins un circuit de freinage du système de freinage assisté.

**5.** Procédé selon l'une des revendications précédentes, selon lequel un moment de freinage total de consigne est réduit en cas d'immobilisation du véhicule et selon lequel, lors du moment de freinage total de consigne réduit, il est contrôlé si, dans le mode de fonctionnement du système de freinage assisté, le moment de freinage total (Mg) exercé diffère du moment de freinage total de consigne réduit d' au moins la différence de référence prédéfinie.

**6.** Procédé selon l'une des revendications précédentes, selon lequel une grandeur de modification de la pression (Δs3, V(t0 → t1)) concernant une modification de la pression dans l'élément de conversion force/pression (22) qui correspond à la modification de la force d'assistance de consigne (ΔFu) définie est déterminée.

**7.** Procédé selon l'une des revendications précédentes, selon lequel une grandeur de changement de forme (Δ) concernant un changement de forme d'au moins un élément de d'accouplement servofrein/élément d'actionnement (18) disposé entre le servofrein (14) et l'élément de conversion force/pression (22) correspondant à la modification de la force d'assistance de consigne (ΔFu) définie est déterminée.

8. Procédé selon la revendication 6 ou 7, selon lequel une modification du volume de consigne (ΔV) dans l'élément de conversion force/pression (22), correspondant à la grandeur de modification de la pression (Δs3, V(t0 → t1)) et/ou à la grandeur de changement de forme (Δ), est définie, et selon lequel la modification du volume de consigne (ΔV) définie est délivrée à au moins un actionneur (38, 42, 44) d'au moins un circuit de freinage du système de freinage assisté.

9. Procédé selon l'une des revendications précédentes, selon lequel il est contrôlé si, dans le mode de fonctionnement du système de freinage assisté, une pompe (38) du système de freinage assisté est commutée dans un mode de pompe dans lequel le volume de fluide de freinage déplacé dans l'élément de conversion force/pression (22) est supérieur au volume de référence prédéfini.

10. Dispositif de commande pour un système de freinage assisté d'un véhicule, comprenant :

un dispositif de détection qui est conçu pour contrôler un mode de fonctionnement du système de freinage assisté en vue d'une concordance entre un moment de freinage total (Mg) exercé par le système de freinage assisté sur au moins une roue (32) du véhicule et un moment de freinage total de consigne prédéfini et/ou en vue d'un déplacement d'un volume de fluide de freinage du système de freinage assisté dans un élément de conversion force/pression (22) du système de freinage assisté et, dans la mesure où une différence de moment de freinage (Mz) entre le moment de freinage total (Mg) exercé et le moment de freinage total de consigne prédéfini est supérieure à une différence de référence prédéfinie et/ou le volume de fluide de freinage déplacé dans l'élément de conversion force/pression (22) est supérieur à un volume de référence prédéfini, délivrer une information (Mz) correspondant à la différence de moment de freinage (Mz) et/ou au volume de fluide de freinage ;
un dispositif d'interprétation qui est conçu pour définir une modification de la force d'assistance de consigne (ΔFu) dépendant du mode de fonctionnement concernant une force d'assistance (Fu) mise à disposition par un servofrein (14) du système de freinage assisté en tenant compte de l'information (Mz) délivrée ; et
un dispositif de sortie qui est conçu pour délivrer au servofrein (14) un signal de commande correspondant à la modification de la force d'assistance de consigne (ΔFu) définie.

11. Système de freinage assisté muni d'un dispositif de commande selon la revendication 10.

12. Véhicule équipé d'un système de freinage assisté selon la revendication 11.

**Fig. 1A**
(Stand der Technik)

**Fig. 1B**
(Stand der Technik)

15

**Fig. 2**

**Fig. 3A**

**Fig. 3B**

Fu(t1)

24    16

Fg

t = t1 > t0

Δs3   20    18

22

**Fig. 3C**

12    Ff

Fu(t1)

16

Fg

t = t2 > t1

20    18

22

24

**Fig. 3D**

12    Ff

EP 2 419 310 B1

Fig. 4

19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102005024577 A1
- DE 10057557 A1
- DE 10327553 A1